(19) 

Europäisches
Patentamt
European
Patent Office
Office européen
des brevets

(11) **EP 2 688 223 B1**

(12) # EUROPEAN PATENT SPECIFICATION

(45) Date of publication and mention
of the grant of the patent:
**06.02.2019 Bulletin 2019/06**

(51) Int Cl.:
*H04B 7/185* (2006.01)     *G01W 1/10* (2006.01)

(21) Application number: **13176944.0**

(22) Date of filing: **17.07.2013**

(54) **System and method for monitoring a territory**

System und Verfahren zur Überwachung eines Gebiets

Système et procédé de surveillance d'un territoire

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.07.2012 IT GE20120071**

(43) Date of publication of application:
**22.01.2014 Bulletin 2014/04**

(73) Proprietors:
• **ARTYS S.R.L.**
**16121 Genoa (IT)**
• **Darts Engineering Srl**
**20121 Milano (IT)**

(72) Inventors:
• **Federici, Bianca**
**I-16145 Genova (IT)**
• **Gragnani, Gian Luigi**
**I-16145 Genova (IT)**
• **Parodi, Giancarlo**
**I-16145 Genova (IT)**
• **Randazzo, Andrea**
**I-16145 Genova (IT)**
• **Caviglia, Daniele**
**I-16145 Genova (IT)**
• **Pastorino, Matteo**
**I-16145 Genova (IT)**
• **Sguerso, Domenico**
**I-16145 Genova (IT)**
• **Caridi, Andrea**
**20121 Milano (IT)**

• **Montecucco, Claudio**
**15069 Serravalle Scrivia (AL) (IT)**

(74) Representative: **Lisa, Elisabetta**
**Praxi Intellectual Property S.p.A.**
**Corso Vittorio Emanuele II, 3**
**10125 Torino (IT)**

(56) References cited:
**EP-A2- 1 049 269       FR-A1- 2 868 547
US-A1- 2008 274 690     US-A1- 2012 139 785**

• **WATSON R J ET AL: "A real-time SHF
propagation forecasting system using numerical
weather predictions and radar measurements",
ANTENNAS AND PROPAGATION SOCIETY
SYMPOSIUM, 2005. IEEE WASHINGTON, DC,
JULY 3 - 8, 2005, PISCATAWAY, NJ : IEEE, US,
vol. 4A, 3 July 2005 (2005-07-03), pages 47-50,
XP010860252, DOI: 10.1109/APS.2005.1552578
ISBN: 978-0-7803-8883-3**
• **PULTZ T J ET AL: "Applications of remotely
sensed data in flood prediction and monitoring:
report of the CEOS disaster management support
group flood team", IGARSS 2002. IEEE 2002
INTERNATIONAL GEOSCIENCE AND REMOTE
SENSING SYMPOSIUM. TORONTO, SWEDEN,
JUNE 24 -28, 2002; [IEEE INTERNATIONAL
GEOSCIENCE AND REMOTE SENSING
SYMPOSIUM], NEW YORK, NY : IEEE, US, vol. 2,
24 June 2002 (2002-06-24), pages 768-770,
XP010597828, ISBN: 978-0-7803-7536-9**

## Description

### TECHNICAL FIELD

The present invention relates to environmental monitoring methods and systems, usually used for preventing environmental disasters from occurring, such as for example floods, landslides, landslips, caused by intense precipitation events such as rain and snow.

More in details, the invention relates to a system according to the preamble of claim 1 and to a relevant monitoring method.

### BACKGROUND ART

It is known that heavy rain precipitations can cause flooding and landslides with damages to populations and buildings.

In order to measure rain precipitations it is known to use rain gauges or to measure the attenuation of radiofrequency signals in terrestrial telecommunication networks, such as mobile telephone networks. However these solutions allow only rain that falls on the ground or however the rain in proximity to the ground to be measured and therefore they do not fit for interpreting in real time the atmospheric phenomenon and for understanding the effects that it may have on the territory.

In order to measure rain precipitations and in order to make weather forecasts it is also known to use weather radars that send microwave pulses in the atmosphere and that measure the intensity of the signal reflected by the rain front. When they are used in a "doppler" mode, these radars allow not only the intensity of precipitations to be measured, but they allow also the moving speed of hydrometeors and their turbulence to be measured.

Even if they are effective in providing data about very large areas (up to more than 120 Km radius) the weather radars have a very high cost that limit their spreading; moreover their characteristics are not such to monitor in real time precipitation events having a high and very high intensity, such as those occurred in Liguria, October 2011, that are particularly dangerous if happening on small and steep watersheds (few square kilometers) which therefore have response time (time of concentration) between the precipitation and the fall towards the outlet of few dozens of minutes.

Other techniques for measuring rain precipitations are based on satellite remote sensing systems. A satellite in non-geostationary orbit is provided with microwave or infrared sensors (e.g. radiometers) from which data are obtained which are used for making rain maps. One of the most important drawback of these systems is to identify and quantify the presence of droplets upper-level (according to profiles transverse to the troposphere) that, however, do not necessarily precipitate; moreover the update frequency of the data is limited by the time of revolution of the satellite around the Earth.

Other solutions that use satellites for measuring rain precipitations, are those based on the estimation of the tropospheric delay acting on GNSS signals (*Global Navigation Satellite System*) received on ground. The influence of the neutral portion of the atmosphere on the GNSS signal is what is called as "tropospheric delay". The high presence of water vapor (droplets lower than 0,1 micron) considerably affects the signal and therefore it can be well observed, while a small presence of water vapor and/or of drizzle has an influence for not more than 10% of what stated above. From the measurement of the entire tropospheric delay (*Total Zenith Delay*) it is therefore possible to obtain the so-called Zenith Wet Delay (*wet tropospheric delay*) and from this one the estimation of the precipitable water content (*Precipitable Water Vapor*) present in the atmosphere column above the GNSS receiver.

From the abstracts of Japanese patent applications JP4204193 and JP41322993 then it is known the idea of measuring the intensity of precipitations starting from the difference in the intensity of a satellite signal received on ground under raining conditions and under good weather conditions. These abstracts however do not teach how to use these techniques for monitoring territories and for preventing environmental disasters from occurring.

From US2008/274690 and EP1049269 methods and apparatuses are known for compensation for weather-based attenuation in a satellite link. These patent applications disclose a satellite receiver that receives a radio signal transmitted from a satellite and measures the power of an electric signal generated by the reception of the radio signal. The receiver transmits to a central system a datum associated to the measured attenuation of the satellite link due to bad weather conditions. The central system comprises a receiver for receiving the datum from the satellite receiver and controls transmission on the satellite link in order to compensate for the bad-weather attenuation.

US2012/0139785 discloses a method for collecting and managing rainfall attenuation and rainfall intensity on satellite communication systems. Data relative to rainfall attenuation is collected by a rainfall attenuation measuring module that generate rainfall attenuation data of a received beacon signal, while data relative to rainfall intensity is collected via a rainfall intensity measuring module using an optical scheme.

## OBJECTS AND SUMMARY OF THE INVENTION

It is the object of the present invention to overcome the prior art drawbacks.

In particular it is an object of the present invention to provide an environmental monitoring method and system using low cost technologies.

Another object is to provide an environmental monitoring method and system that provide detailed and real-time information about heavy precipitation events, so as to allow watersheds with a short time of concentration to be monitored.

In particular it is an object of the present invention to define early, and possibly in an inexpensive way, states of alert, which are proportioned to the hazard of a monitored precipitation event and which are located accurately in space and time, before they can cause damages to people or things, as a consequence of their effects at the ground.

These and other objects of the present invention are achieved by a system and a method for monitoring a territory which incorporate the characteristics of the annexed claims, which are an integral part of the present invention.

The idea at the base of the present invention is to provide an environmental monitoring system comprising a central system and a plurality of remote measuring units operatively connected to the central system. Each remote measuring unit comprises a receiver, that receives a radio signal transmitted from a satellite and measures the power of an electric signal generated by the reception of the radio signal. The measuring unit then comprises a transmitter for transmitting to the central system a datum associated to the measured power together with information about the transmitting satellite and about the measuring unit. The central system in turn comprises a receiver for receiving the data transmitted from the remote measuring units, and a processing unit operatively connected to the receiver and configured for calculating, on the basis of the data received from the measuring units, the trajectories of the radio signals received from the measuring units, the intensity and position on the territory of weather events that attenuate the radio signals received from said plurality of measuring units.

This solution provides the advantage of using low cost instruments for the indirect measurement of the power of a satellite radio signal that, due to its nature, passes through the weather phenomena occurring in the troposphere and therefore, once the position of transmitting and receiving antennas is known (satellite and measuring unit), it allows information about their position and intensity to be obtained, for example rain or water vapor amount. Therefore the low cost allows a plurality of measuring units to be installed, so that on the territory there is a close network of measuring instruments though which monitoring small size territories.

In one embodiment, the datum transmitted from the remote measuring unit is a difference between the power of the measured signal and a reference power measured for a signal transmitted from the satellite under good weather conditions; the processing unit of the central system calculates a measurement of the intensity of the rain precipitations, the situation of the free surface of the water of at least one watercourse of the territory and an estimation of the territories at flood risk.

In one alternative embodiment, the intensity of the rain precipitations is calculated at the measuring unit, which transmits such data to the central system; the latter then calculates the profile of the free surface of the water of at least one watercourse of the territory and an estimation of the territories at flood risk.

In one embodiment, the central system is intended to calculate a length of the path of the radio signal affected by weather precipitations, the intensity of rain precipitations according to the following formula:

$$R = \sqrt[\alpha]{\frac{\overline{a_r}}{k}}$$

where R is the precipitation intensity (e.g. rain) in mm/h, k and $\alpha$ are constants selected depending on the position of the territory and the frequency and polarization of the satellite signal, $a_r$ is the specific attenuation calculated for the received radio signal, said specific attenuation being calculated dividing the ratio (expressed as db) of the power of the measured electric signal to a reference power measured for an electric signal generated as a response to the reception of a radio signal transmitted from the same satellite under good weather conditions by the length of the path affected by precipitations.

In one embodiment, the central system further comprises transmitting means for transmitting alarm signals to at least one remote alarm unit, for example a police station or civil protection station, but also a simple terminal or device able to generate a local alarm.

Preferably the central system is intended to transmit alarm signals to at least one remote alarm unit placed in a region of the territory where the environmental risk calculated by the processing unit overcomes a threshold value. Thus it is possible to warn the population in territories under environmental risk, for example those at flood risk.

According to a particular embodiment, the alarm units comprise at least one mobile terminal (e.g. a telephone) and the central system is intended to send alarm signals in the form of text messages, for example SMS or MMS, to the mobile terminal. The use of text message to be sent to mobile terminal telephones connected to a telephone network, allows a timely alarm and precise information on the terrotory, since the telephone network is aware of the mobile terminals that access to each cell of the network.

In one embodiment, the receiver of the measuring unit comprises a GNSS receiver. In this embodiment, the tropospheric delay of a GNSS signal is measured. Given the frequency of GNSS signals, this solution allows the presence of water vapor to be detected. Therefore such information can be integrated with information deriving from the reception of other types of satellite signals, in particular those of commercial televisions transmitted in SHF band, for making accurate forecasts of weather events. In another embodiment, at least one measuring unit of said plurality is connected to a home television set and the electric signal whose power is measured is the signal transmitted from an antenna of the television set towards a home television receiver. These solutions, wherein television or GNSS signals are received, are particularly advantageous since they allow a low-cost monitoring network to be made by using at least partially already existing plants and devices. The use of the GNSS receiver, in case also of a different type with respect to what necessary for the above estimations, allows updated information to be always provided about the measuring unit, which allows, as it will be seen below, the trajectory of the satellite radio signal to be correctly derived and the position and movement of hydrometeors to be correctly calculated.

In one embodiment, the invention relates also to a method for monitoring a territory, wherein

- a plurality of radio signals transmitted from at least one satellite are received at different points of the territory,
- for each radio signal received from a specific satellite

  ○ a length of a path of the radio signal affected by atmospheric precipitations is calculated,
  ○ the power of an electric signal generated by the reception of the radio signal is measured,
  ○ a ratio between the measured power and a reference value is calculated, said reference value being a measurement of the power of a corresponding electric signal generated by the reception of a radio signal transmitted from the same satellite under good weather conditions,
  ○ starting from said ratio and said length of the path, the intensity and position of precipitations that attenuate it with respect to good weather conditions are estimated

on the basis of information about intensity and position of the precipitations that have attenuated said plurality of received radio signals, a map of the precipitations is generated.

According to another aspect, the invention relates also to a satellite television receiver, comprising an antenna input for the connection to an antenna intended to receive satellite television signals, and means operatively connected to the antenna input for decoding the electric signals provided at said antenna input. The receiver further comprises means for measuring the power of an electric signal provided at said antenna input and means for transmitting a datum associated to said measurement to a remote device.

Further objects and advantages of the present invention will be more clear from the following description.

BRIEF DESCRIPTION OF THE DRAWINGS

The invention will be described below with reference to non-limiting examples, provided by way of example and not as a limitation in the annexed drawings. These drawings show different aspects and embodiments of the present invention and, where appropriate, reference numerals showing like structures, components, materials and/or elements in different figures are denoted by like reference numerals.

Figure 1 schematically shows a monitoring system according to one embodiment of the present invention;
Figure 2 shows a block diagram of a measuring unit used in the system of fig.1;
Figure 3 shows a block diagram of the central system of figure 1;
Figures 4a and 4b show two flowcharts of two alternative forms of a monitoring system according to the present invention;
Figure 5 shows a block diagram of a measuring unit according to an embodiment alternative to that of figure 2;
Figure 6 shows a block diagram of a measuring unit according to an embodiment alternative to that of figure 2;
Figure 7 shows a flowchart of a monitoring method alternative to that of figure 4b;
Figures 8a and 8b schematically show the reception of a satellite radio signal by a measuring unit of the system of figure 1 and the calculation of the position of rain precipitations on the territory.

**DETAILLED DESCRIPTION OF THE INVENTION**

While the invention is susceptible of various modifications and alternative forms, some relevant described embodiments are shown in the drawings and will be described below in detail. It should be understood, however, that there is no intention to limit the invention to the specific embodiment disclosed, but, on the contrary, the intention of the invention is to cover all modifications, alternative forms, and equivalents falling within the scope of the invention as defined in the claims.

The use of "for example", "etc.", "or" indicates non-exclusive alternatives without limitation unless otherwise noted. The use of "including" means "including, but not limited to," unless otherwise noted.

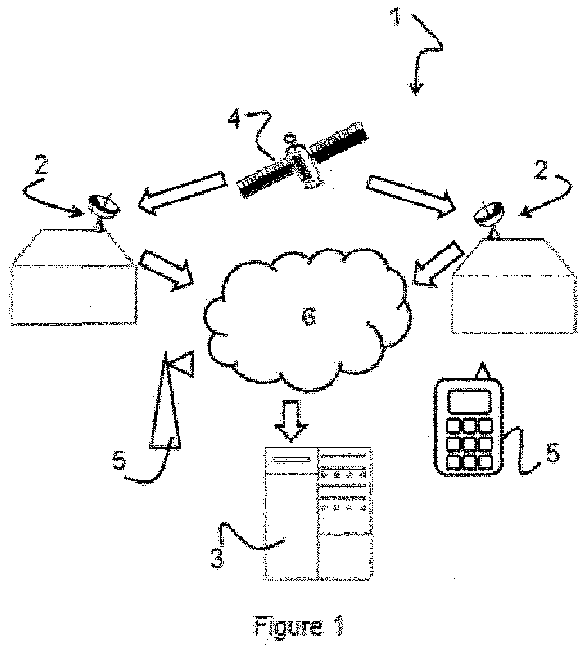

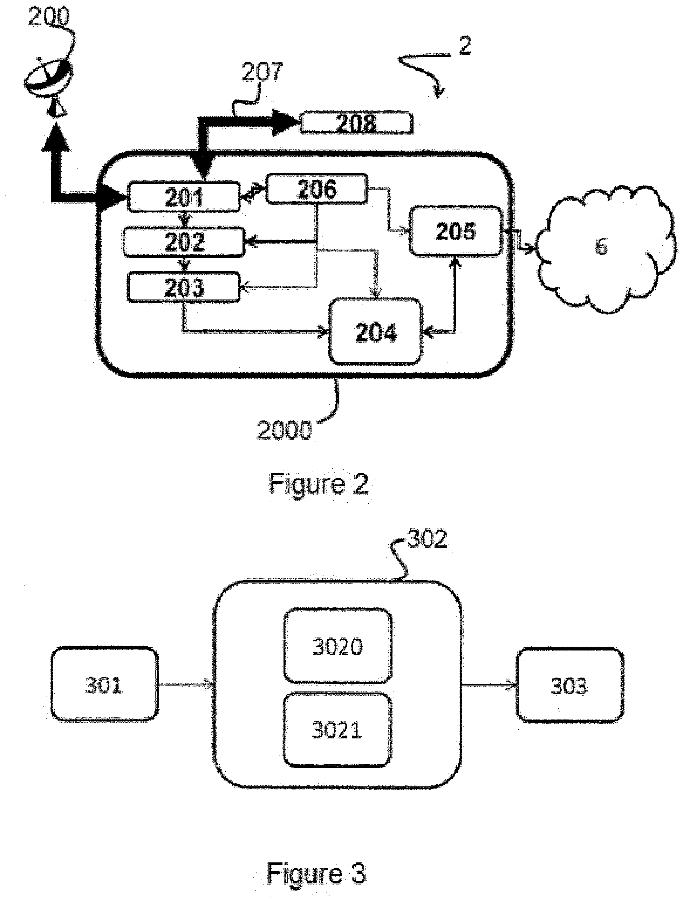

With reference to figures 1 and 2 a monitoring system 1 is described comprising a plurality of remote measuring units 2 in communication with a central system 3.

The measuring units, better detailed below, receive a radio satellite signal from one or more satellites 4 and measure the power of the electric signal generated as a response to the reception of electromagnetic waves constituting the radio satellite signal. In the preferred embodiment described below, the satellite/satellites 4 transmits/transmit microwave signals in the SHF band (from 3 to 30 GHz), and more preferably signals with a frequency ranging from 5 to 15 GHz, which are sensitive to the presence of water in the troposphere. Preferably the satellites 4 transmit commercial television signals, that, as it can be seen below, allow a low cost monitoring system to be made by using facilities already existing for other purposes. The measured power value is therefore transferred to the central system that processes the datum and decides whether sending alarm signals to remote alarm units 5 for warning people about an environmental risk. Preferred, but not limitative, embodiments, of the alarm units can be alarm stations (for example a police station), alarm sirens, mobile telephones or other devices able to generate a local (audible or visual) alarm. In particular, in a preferred embodiment, the central system warns the population of a territory at risk by sending text messages, for example SMS (Short Message System) or MMS (Multimedia Message System); however other solutions, such as sending e-mails and other type of messages, are possible. In a particularly preferred embodiment, the central system warns the providers of telecommunication networks present on the territory at risk, so that alarm messages can be sent to all the mobile terminals connected to a cell placed on the territory at risk and belonging to one of said telecommunication networks.

With reference to the details of the measuring units 2, in the preferred embodiment, shown with reference to figure 2, they comprise one or more antennas 200, in particular parabolic antennas for receiving radio signals from a satellite, and a measuring device 2000.

The measuring device 2000 comprises a RF connector 201 for the connection to a radiofrequency line, in particular a coaxial cable, transporting the signal from the antenna 200. The connector 201 therefore allows the output electric signal from the antenna 200 to be received.

A RF filter 202, placed in series with the RF connector 201 filters the signal received in a particular band and passes it to a module 203 that detects the power of the signal received within such band. In the example of figure 2, the connector 201 is connected to the coaxial cable coming from the antenna; as it is known a satellite antenna usually comprises a LNB (Low Noise Block) that receives the signal collected by the antenna, amplifies it and converts it into a frequency lower than the received one, typically a frequency ranging from 950 MHz to 2.15 GHz. The filter 202 is therefore calibrated for filtering a signal in this band, such to measure the power of the signal transmitted from the LNB.

The module 203 provides the value of the measured power to a processor 204 that processes it and generates a data packet ready to be received and transmitted from a network interface 205.

In the preferred embodiment, the transmitted data packet comprises both the value of the measured power, and information about the satellite that has transmitted the radio signal, and information about the position or identification of the measuring unit 2. Such information, as it will be better disclosed below, allows the central system to detect the intensity of precipitations in the troposphere passed through by the satellite signal, and therefore allows precipitations and the risk of precipitations on the territory to be located.

In the preferred embodiment the network interface 205 comprises a UMTS modem (Universal Mobile Telecommunication System) or GPRS (General Packet Radio Service) or HSDPA (High Speed Downlink Packet Access) or LTE (Long Term Evolution) for transmitting data packets through a telephone network 6. In another embodiment, the network interface 205 is an Ethernet interface or WiFi interface or an interface of any other known type. Preferably, the measuring units 2 are inserted in a SOS network (Sensor Observation Service) of a GIS system (Geographic Information System) and therefore they have a corresponding network interface 205. The power supply of the several electronic components of the measuring device 2000 is guaranteed by a power supply module 206. In the embodiment of figure 2, the power supply module 206 is arranged for taking a voltage from a network cable or a communication line, for example the module 206 can be configured to be connected to a coaxial cable 207 of an antenna system, for example a MATV system (*Master Antenna TV*), that brings data and power supply to the LNB of the satellite antenna, for example by DiSEqC protocol (*Digital Satellite Equipment Control*). In addition or as an alternative to the power supply by cable, the module 206 can be arranged for taking a power supply voltage from an electric network or a battery.

In the example of figure 2, in order to take the power supply voltage from the coaxial cable 207, the power supply module 206 is connected to the connector 201 that carries out both the connection with the antenna 200, and the one with the cable 207, allowing signals to be taken and inserted on the cable 207.

In this embodiment, through the connector 201 it is therefore possible to take the signal received from the antenna 200 for measuring its power (through the modules 202 and 203), to take a power supply voltage from the cable 207 and to insert on the cable 207 the signal received from the antenna 200 such to send it to a receiver 208, for example a television decoder.

The power supply module 206 then comprises a converter able to provide one or more output voltages for supplying the several components of the measuring device 201.

The measuring unit 2 described above therefore allows the power of a signal transmitted from a satellite to be detected, such as for example a satellite television signal. For monitoring purposes, information contents of the satellite signal has no importance, so in the preferred and advantageous embodiment the monitoring system uses a signal used also for other purposes, that is it transports data and information intended for devices outside the system. This allows parts of networks and systems already available for other purposes to be used.

The central system 3 receives and processes the data received from the several measuring units 2. A block diagram of the central system 3, according to a first embodiment, is shown in figure 3. The central system 3 comprises a receiver 301 able to receive the datum transmitted from the measuring unit 2 and to transmit it to a control unit 302.

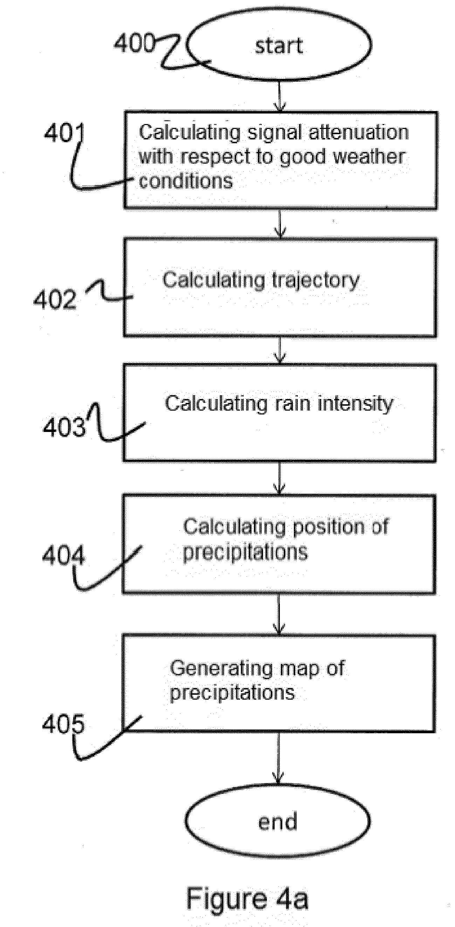

The latter comprises a processor 3020, a non-volatile program memory 3021. The processor 3020 executes a code stored in the memory 3021 that allows the method described below to be carried out with reference to figure 4a for monitoring a territory.

The method starts at step 400, when the processor receives data packets from the receiver 301.

Then, step 401, the processor extracts the datum related to the measurement of the power of the signal received from a measuring unit and it compares it with a reference value corresponding to a measurement of the power of a corresponding signal received from the same measuring unit under good weather conditions. In one embodiment, the reference value with which the measurement is compared is inserted in the set-up phase of the system and it is periodically updated manually or automatically, remotely or locally on the site where the measuring unit is located. By the comparison between the power measured by the measuring unit and the reference value, the processor 3020 calculates a signal attenuation that is related to the precipitation intensity.

Later, or by a process (*thread*) carried out in parallel, the processor 3020 uses the data about the transmitting satellite and the receiving unit for calculating (step 402) the trajectory of the satellite signal from which the power measurement has been received.

For calculating the trajectory of the radio satellite signal it is necessary to know the position of the satellite and of the measuring unit. Such information can be transmitted from the measuring unit to the central system, but they can be also determined at the central system starting from other information transmitted from the measuring units. If measuring units are stationary, for example since they are connected to a home television system, the central system stores their position and their identification, thus when it receives a signal from a measuring unit, it can obtain the position by means of a comparison table (*look-up table*). Even the position of satellites can be known by the central system without the need of being transmitted. Should the system use signals of commercially-made televisions, the satellites are of the geostationary type and therefore, like what said above about measuring units, by knowing the transmitting satellite it is possible to obtain its position by means of a comparison table (*look-up table*).

Starting from the attenuation and from the trajectory calculated at the previous steps, the rain intensity is estimated (step 403) according to the following formula:

$$R = \sqrt[\alpha]{\frac{a_r}{k}} \qquad\qquad (1)$$

wherein $a_r$ is the specific attenuation (dB/Km) of the received radio signal, calculated dividing the ratio (expressed as dB) of the power of the measured electric signal to a reference power measured for an electric signal generated as a response to the reception of a radio signal transmitted from the same satellite under good weather conditions by the length of the path affected by precipitations. R is the intensity of the precipitation (e.g. rain) in mm/h and two parameters k and $\alpha$ are functions of the climatic zones (latitude and longitude of the earth station) as well as of the frequency and polarization of the electromagnetic wave. Such parameters are specified by Recommendation ITU_RP.838.

In the preferred embodiment, the intensity of precipitations in a given territory, is therefore calculated (step 402 of the method) starting from the intensity of the precipitations calculated by the formula (1) starting from electric signals generated by the reception of radio signals that, received from several measuring units, have trajectories passing through a given portion of the atmosphere.

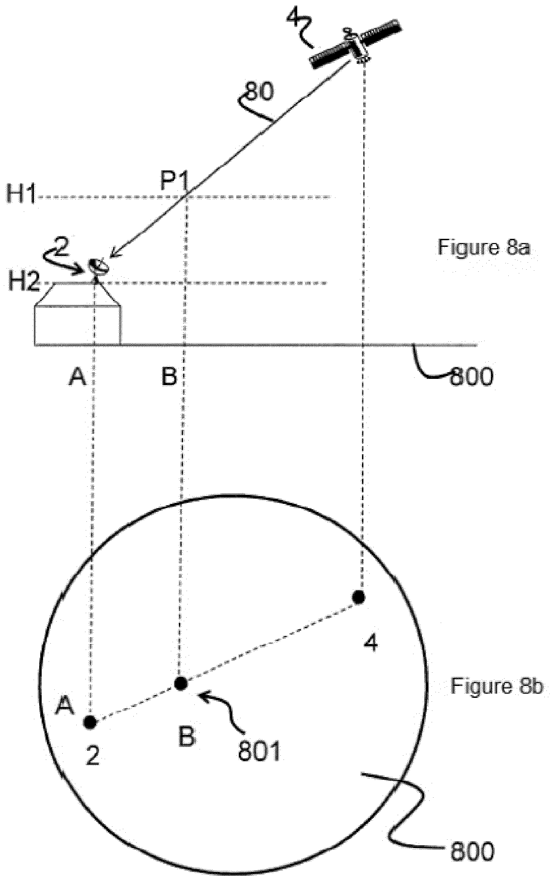

Later, step 404, the position of atmospheric precipitations is estimated. The estimation of the position of precipitations is described below with reference to figures 8a and 8b that show a front and a top view, respectively, of a measuring unit 2 receiving a radio signal 80 from the satellite 4. Once the position (longitude, latitude and height above sea level) of the measuring unit 2 and of the satellite 4 is known, the point P1 is calculated wherein the radio signal intercepts the isotherm H1 at 0° C and therefore it begins to be subjected to precipitations.

Thus it is possible to calculate the length of the path P1-2 of the radio satellite signal subjected to precipitations.

By projecting on the ground the path P1-2 of the radio signal subjected to precipitations, therefore a segment AB of the territory subjected to rain precipitations is determined with an intensity given by formula (1).

Obviously other methods, also known per se if any, can be used for calculating the position of the precipitations on the territory, for example methods based on "mixing ratio" or "condensation mixing ratio" can be used.

The possibility of having on the ground a plurality of receiving antennas plus satellites, allows therefore a so called tomography of the atmospheric layers to be carried out by discretizing them upper level as a function of the discretization at the ground. The latter is due to the distribution of the measuring units arranged on the territory. The higher such distribution is the more fine the discretization will be both the planimetric and altimetrical discretization of the troposphere. Such discretization provides a sort of three-dimensional numerical model, where in each cell the contents of water in the liquid form has been evaluated.

Once the paths of the radio signals subjected to atmospheric precipitations (and consequently the positions of precipitations) and the intensity of such precipitations are calculated, the processor unit 3020 generates, step 405, a map of the precipitations, preferably by interpolating the intensity and position data calculated at the previous steps.

The monitoring of space-time evolutions of the phenomena, integrated with information from other systems (such as for example GNSS) can contribute in better estimating short term forecasts.

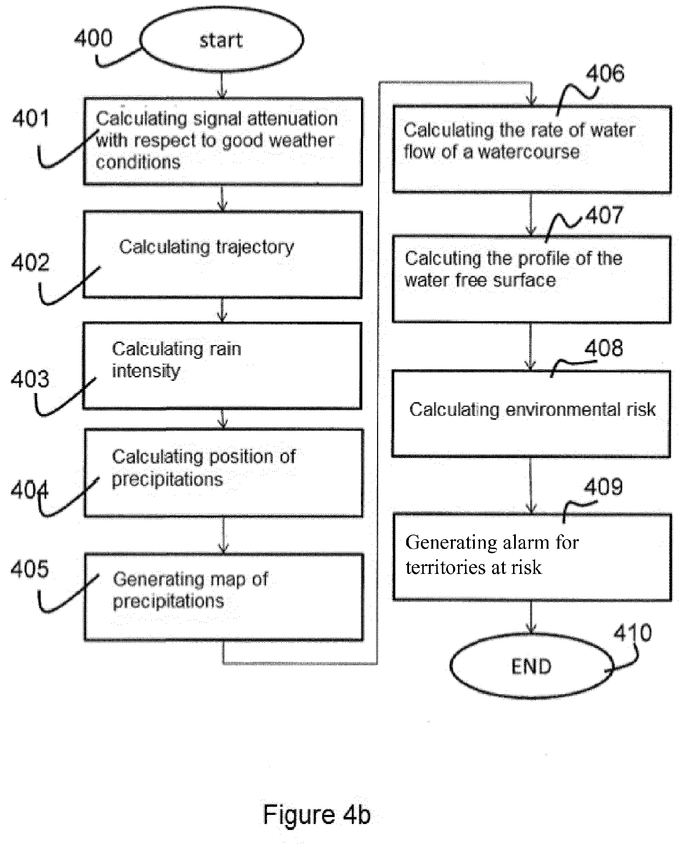

In the embodiment of figure 4b, it shows the steps of a method alternative to that of figure 4a. In this embodiment, the memory unit 3021 comprises a hydrogeological model of the territory to be monitored, the model therefore comprises data about the orography of the territory, the bed and the path of watercourses present on the territory.

In addition to the generation of the precipitation map, by using the model of the territory to be monitored, the processor 3020 calculates (step 406) the expected rate of water flow of a watercourse starting from the measurement of the intensity of the precipitations provided on the several measuring units 2 and of the hydrological analyses (integrated in the model) of the watercourse.

Once the rate of water flow of the watercourse is calculated, at step 407 the method provides to calculate the profile of the water free surface of the watercourse starting from the calculated rate of water flow and from the orography of the bed of the watercourse, since the latter is available in the model of the territory mentioned above.

Finally, step 408, regions of the territory potentially floodable by the watercourse are defined on the basis of the profile of the water free surface and of the orography of the territory, since this is a datum of the model too.

If a territory is under flooding risk, the processor 3020 generates an alarm signal (step 409) that, in the preferred embodiment, is transmitted to remote alarm units 5 by means of a transmitter 303.

The transmission of alarm signals preferably occurs by employing cryptography in order to prevent data from being tampered.

As an alternative or in addition to the transmission of the alarm signal, it can be displayed on a monitor of the central system where an operator is working.

In case of transmission to remote alarm units, the type of the transmitted alarm signal depends on the type of alarm unit. For example, the alarm signal can be a text message (e.g. SMS or MMS) sent to a remote terminal, particularly a mobile telephone.

With reference to the territory model and to the calculation of the environmental risk, the profile of the free surface of the flow will be calculated per assigned rate of water flow, through the use of one-dimensional hydraulic models, such as for example HEC-RAS® software; therefore hazard maps will be created through an innovative automatic procedure built in GIS environment that models the overflow process, for then coming to the definition of perimeters of the territories potentially under flooding risk, by integrating these maps with information related to the vulnerability of the analyzed territory and the elements at risk provided therein and therefore potentially interested to the phenomenon.

The "risk", defined for the first time in a UNESCO statement edited by Varnes and by IAEG (International Association for Engineering Geology and the Environment), is the "expected degree of loss within a given territory and within a specified period of time due to a particular damaging phenomenon".

From the mathematical point of view, the risk R is calculated as the product of three factors:

1) H (hazard), probability that a damaging event of a given magnitude affects a given spatial region within a specified period of time;
2) E (elements at risk), a suitable magnitude indicating the elements at risk, all the elements (e.g. population, property, economic activities) present in a given area, and therefore potentially involved by the phenomenon;
3) V (vulnerability), expected degree of loss of the elements at risk, resulting from the occurrence of a damaging phenomenon of a given magnitude

The deep knowledge of the territory and of the elements present thereon allow, for example in GIS environment, to carry out analyses of vulnerability (V) and position of elements at risk (E). The hazard map (H) will be calculated by the procedure described above with reference to figures 4a and 4b, still implementable in GIS environment, once known and made the altimetrical model of the territory and the profile of the free surface at the axis of the bed of a water course. The product of such factors will lead to the creation of maps of potential risk.

An innovative feature of the procedure for modeling the overflow is that, while maintaining substantially one-dimensional characteristics, it considers the two-dimensionality both of the territory and of the overflow phenomenon, due to the recursive nature of the procedure itself.

In comparison with a really two-dimensional model that is one model that simulates the water propagation in all the directions of the plane, this procedure has the advantage of requiring a smaller computational burden, allowing it to be applied even to very long watercourse portions, with an extension exceeding 100 km; it can be also applied to the propagation of a flood wave, once the stationary profiles of the free surface are known at different moments, for obtaining the evolution over time of the flooding process. The two-dimensional models need moreover a calibration that often is not easy above all on a large scale, which is not required by the present procedure.

Considering the above, it is clear how the monitoring system and method described above reach the predetermined objects.

Moreover it is clear that many variants can be made to the system and method described above without departing from the protection scope defined by the annexed claims.

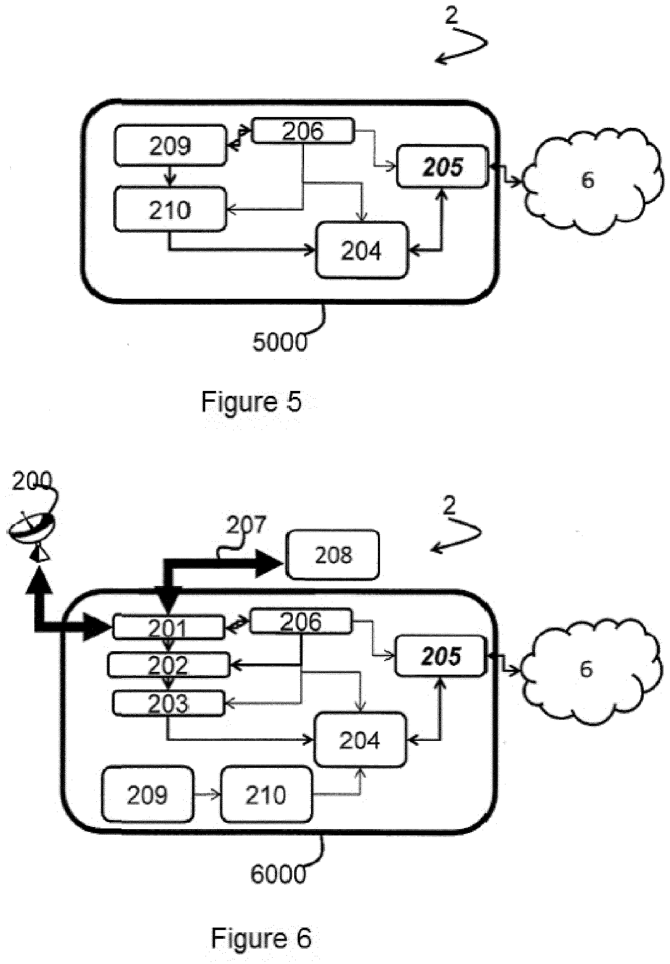

For example, in figure 5 there is shown an alternative measuring unit 2 with respect to the one described above with reference to figure 2.

In the embodiment of figure 5, the measuring unit 2 comprises a measuring device 5000 comprising a GNSS receiver 209 that receives signals of the GNSS type and it measures their power and/or delay such to calculate (at the central system or processor 204) the position and/or intensity of atmospheric events (e.g. rain precipitation or water vapor).

A module 210, connected to the receiver 209, is provided for measuring the power and/or delay of the signal and it provides the measured datum to the processor 204 that provides to forward it to the central system in a way similar to what described with reference to figure 2. As it is known, GNSS signals are typically transmitted at a frequency lower than those used for television transmissions. In particular GNSS signals are usually transmitted in the L band, for example about 1.2 GHz and 1.5 GHz for GPS system. At such frequencies, the attenuation of radio signals deeply depends more on the water vapor than droplets that precipitate down; the measuring unit of figure 5, therefore allows the presence of hydrometeors to be determined and the water vapor to be measured. Such information can be used by the monitoring system 1 for integrating information about the precipitations measured by other measuring units, for example the units provided with a measuring device 2000, that receive signals at frequencies sensitive to atmospheric precipitations, for example signals of commercially-made televisions.

In the embodiment of figure 6, the measuring unit comprises a measuring device comprising components of the devices 2000 and 5000 described above and therefore it can receive signals of different type (e.g. satellite TV and GNSS) for measuring the power thereof.

The use of a GNSS receiver then allows the datum coming from the measuring devices to be geo-localized. Thus, if the device is moved, from time to time, it will communicate information that is always and univocally related to its own current position.

With reference to the monitoring method, described above with reference to the reception of a single datum for simplicity reasons, it is clear that it is possible to obtain more precise data about the precipitations interpolating data coming from several measuring units.

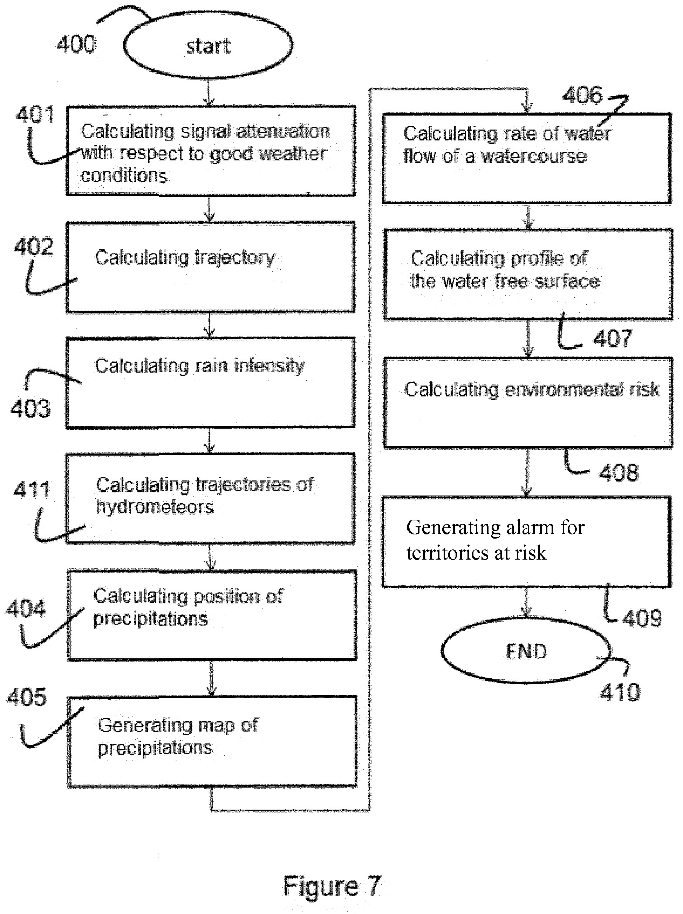

In the example of figure 7, in addition to steps 400-410 described above with reference to figure 4b, the monitoring system provides a further step (411) for calculating the trajectories of the hydrometeors.

Such calculation is made by interpolating the data received from the several measuring units 2 arranged on the territory. Each measuring unit receives satellite signals from one or more satellites and therefore it provides information on precipitations along one or more trajectories. By interpolating the data received from the several measuring units, therefore, the central system is able to understand the trajectories of the hydrometeors and to consider them in order to forecast the profile of the water free surface of the watercourses present on a given territory, such to calculate more accurately the environmental risk and to generate alarm signals within a time useful for taking measures for the protection of the population.

Even if the invention has been described above with reference to specific block diagrams, it is clear that such block are merely by way of illustration for the functions of the system and therefore it can be carried out by unifying, integrating or separating the blocks mentioned above.

Likewise, different devices can be unified and integrated in different manners, for example the central system 3 can be a system of the *cloud* type, wherein different computers execute different portions of the process calculating the environmental risk.

In one embodiment, the measuring device (2000, 5000 or 6000 depending on the selected embodiment) is made as an electronic board intended to be integrated into satellite television decoders. As an alternative, the functions measuring the power and possibly calculating the rain intensity according to formula (1), can be carried out by software, by adding code portions intended for the aim to the software of a receiver/decoder of television signals.

Therefore the present description relates also to a satellite television receiver, comprising an antenna input for the connection to an antenna intended to receive satellite television signals, means operatively connected to the antenna input for decoding the electric signals provided at said antenna input, the receiver being characterized in that it further comprises means for measuring the power of an electric signal provided at said antenna input and means for transmitting to a remote device (3) a datum associated to said measurement.

**Claims**

1. Environmental monitoring system (1) comprising a central system (3) and a plurality of remote measuring units (2) operatively connected to the central system (3), wherein
   each remote measuring unit (2) comprises

   • a receiver (200-203) intended to receive a radio signal transmitted from a satellite (4) and to measure the power of an electric signal generated by the reception of the radio signal,
   • a transmitting system (205) for transmitting to the central system a datum associated to the measured power, information about said satellite and information about the measuring unit,

   and wherein the central system (3) comprises

   • a receiver (301) for receiving the data transmitted from the remote measuring unit
   • a processing unit (3020) operatively connected to the receiver (301) for calculating, on the basis of the data transmitted from the remote measuring units (2), a length of path of the radio signals received from the measuring units up to isotherm H1 at 0° C (P1), the intensity and position on the territory of atmospheric precipitations that attenuate the radio signals received from said plurality of measuring units, said position on the territory being calculated from the projection of said length of path on the ground (A,B).

2. System according to claim 1, wherein at least one measuring unit of said plurality comprises a receiver intended to receive a radio signal in SHF band, and wherein the processing unit is intended to calculate the intensity and position of the rain that attenuates the radio signal in SHF band.

3. System according to claim 1 or 2, wherein at least one measuring unit of said plurality comprises a receiver intended to receive radio signals with a frequency ranging from 1 to 2 GHz, particularly GNSS signals, and wherein the processing unit is intended to calculate the position of water vapor that attenuates and/or delays the radio signal received with a frequency ranging from 1 to 2 GHz.

4. System according to claim 3, wherein the radio receiver intended to receive radio signals with a frequency ranging from 1 to 2 GHz is a GNSS receiver able to detect a position of the receiver, and wherein the measuring unit is intended to transmit the position detected to said central system.

5. System according to any of the preceding claims, wherein the central system further comprises a program memory (3021) storing code lines of an electronic model of a territory to be monitored, the model comprising data about the orography of the territory, and wherein the processing unit is intended to calculate, on the basis of information contained in the electronic model of the territory and on the basis of the data transmitted from the remote measuring units (2), an environmental risk for said territory, said environmental risk being a risk deriving from atmospheric precipitations.

6. System according to any of the preceding claims when dependent from claim 2, wherein the central system is intended to calculate a path of the signal affected by precipitations and to calculate the intensity of rain according to the following formula

$$R = \sqrt[\alpha]{\frac{a_r}{k}}$$

where R is the precipitation intensity (e.g. rain) in mm/h, k and $\alpha$ are constants selected depending on the position of the territory and the frequency and polarization of the satellite signal, $a_r$ is the specific attenuation calculated for the received radio signal, said specific attenuation being calculated dividing the ratio (expressed as db) of the power of the measured electric signal to a reference power measured for an electric signal generated as a response to the reception of a radio signal transmitted from the same satellite under good weather conditions by the length of the path affected by precipitations.

7. System according to any of the preceding claims, wherein the central system further comprises transmitting means for transmitting alarm signals to at least one remote alarm unit placed in a region of the territory wherein the environmental risk calculated by the processing unit overcomes a threshold value.

8. System according to any claims 1 to 7, wherein at least one measuring unit of said plurality is connected to a home television set and wherein the electric signal whose power is measured is the signal transmitted by an antenna of the television set towards a home television receiver.

9. Method for monitoring a territory, wherein

    - a plurality of radio signals transmitted from at least one satellite are received at different points of the territory,
    - for each radio signal received from a specific satellite

        ◦ a length of a path of the radio signal received from one of said points of the territory up to isotherm H1 at 0° C and affected by atmospheric precipitations, is calculated
        ◦ the power of an electric signal generated by the reception of the radio signal is measured
        ◦ a ratio of the measured power to a reference value is calculated, said reference value being a measurement of the power of a corresponding electric signal generated by the reception of a radio signal transmitted from the same satellite under good weather conditions,
        ◦ starting from said ratio and said length of a path, the intensity and position of precipitations that have attenuated it with respect to good weather conditions are estimated,

    - on the basis of information about intensity and position of the precipitations that have attenuated said plurality of received radio signals, a map of the precipitations is generated based on projection of said length of path on the ground.

10. System according to claims 1 to 8 further comprising, as a remote measuring unit, a satellite television receiver, comprising an antenna input for the connection to an antenna intended to receive satellite television signals, means operatively connected to the antenna input for decoding the electric signals provided at said antenna input, the receiver further comprising means for measuring the power of an electric signal provided at said antenna input and means for transmitting to a remote device (3) a datum associated to said measurement.

**Patentansprüche**

1. Umweltüberwachungssystem (1), umfassend ein Zentralsystem (3) und mehrere mit dem Zentralsystem (3) in Wirkverbindung stehende Femmesseinheiten (2), wobei jede Femmesseinheit (2)

    - einen Empfänger (200-203) zum Empfangen ein von einem Satelliten (4) gesendetes Funksignal und zum Messen der Leistung eines durch den Empfang des Funksignals erzeugten elektrischen Signals,
    - ein Sendesystem (205) zum Übertragen eines der gemessenen Leistung zugeordneten Datums, von Informationen über den Satelliten und Informationen über die Messeinheit an das Zentralsystem umfasst,

    und wobei das Zentralsystem (3)

- einen Empfänger (301) zum Empfangen der von der Femmesseinheit gesendeten Daten und
- eine mit dem Empfänger (301) wirkverbundene Verarbeitungseinheit (3020) aufweist zum Berechnen, basierend auf den von den Femmesseinheiten (2) gesendeten Daten, einer Weglänge der von den Messeinheiten bis zur Isotherme H1 bei 0°C (PI) empfangenen Funksignalen, der Intensität und Position im Territorium von atmosphärischen Niederschlägen, die die von der Mehrzahl von Messeinheiten empfangenen Funksignale dämpfen, wobei die Position im Territorium aus der Projektion dieser Weglänge auf dem Erdboden (A,B) berechnet wird.

2. System nach Anspruch 1, wobei zumindest eine von der Mehrzahl von Messeinheiten einen Empfänger zum Empfangen eines im SHF-Band liegenden Funksignals umfasst und wobei die Verarbeitungseinheit zum Berechnen der Intensität und Position des das Funksignal im SHF-Band dämpfenden Regens vorgesehen ist.

3. System nach Anspruch 1 oder 2, wobei zumindest eine von der Mehrzahl von Messeinheiten einen Empfänger zum Empfangen von Funksignalen mit einer Frequenz im Bereich von 1 bis 2 GHz, insbesondere von GNSS-Signalen umfasst, und wobei die Verarbeitungseinheit zum Berechnen der Position von Wasserdampf, der das mit einer Frequenz im Bereich von 1 bis 2 GHz empfangene Funksignal dämpft und/oder verzögert, vorgesehen ist.

4. System nach Anspruch 3, wobei der zum Empfangen von Funksignalen mit einer Frequenz im Bereich von 1 bis 2 GHz vorgesehene Funkempfänger ein GNSS-Empfänger ist, der dazu fähig ist, eine Position des Empfängers zu erfassen, und wobei die Messeinheit dazu vorgesehen ist, die erfasste Position an das Zentralsystem zu übermitteln.

5. System nach einem der vorhergehenden Ansprüche, wobei das Zentralsystem ferner einen Programmspeicher (3021) umfasst, der Code-Zeilen eines elektronischen Modells eines zu überwachenden Territoriums speichert, wobei das Modell Daten über die Orographie des Territoriums umfasst, und wobei die Verarbeitungseinheit zum Berechnen eines Umweltrisikos für das Territorium vorgesehen ist, basierend auf Informationen, die in dem elektronischen Modell des Territoriums enthalten sind, und auf Daten, die von den Fernmesseinheiten (2) übertragen werden, wobei das Umweltrisiko ein aus atmosphärischen Niederschlägen stammendes Risiko darstellt.

6. System nach einem der vorhergehenden Ansprüche, wenn von Anspruch 2 abhängig, wobei das Zentralsystem zum Berechnen eines von Niederschlägen betroffenen Signalweges und zum Berechnen der Regenintensität nach folgender Formel vorgesehen ist:

$$R = \sqrt[\alpha]{\frac{a_r}{k}}$$

wobei R die Niederschlagsintensität (z. B. Regen) in mm/h ist, k und $\alpha$ Konstanten sind, die in Abhängigkeit von der Position des Territoriums und der Frequenz und Polarisation des Satellitensignals ausgewählt werden, $a_r$ die für das empfangene Funksignal berechnete spezifische Dämpfung ist, wobei die spezifische Dämpfung durch Dividieren des Verhältnisses (ausgedrückt in dB) von der Leistung des gemessenen elektrischen Signals zu einer Referenzleistung, die für ein in Antwort auf den Empfang eines von demselben Satelliten unter guten Wetterbedingungen gesendeten Funksignals erzeugtes elektrisches Signal gemessen wird, durch die von Niederschlägen betroffene Weglänge berechnet wird.

7. System nach einem der vorhergehenden Ansprüche, wobei das Zentralsystem ferner Sendemittel zum Senden von Alarmsignalen an mindestens eine Fernalarmeinheit umfasst, die in einem Bereich des Territoriums angeordnet ist, in dem das von der Verarbeitungseinheit berechnete Umweltrisiko einen Schwellwert überwindet.

8. System nach einem der Ansprüche 1 bis 7, wobei zumindest eine von der Mehrzahl von Messeinheiten mit einer Haushalt-Fernsehanlage verbunden ist und wobei das elektrische Signal, dessen Leistung gemessen wird, das von einer Antenne der Fernsehanlage an einen Haushalt-Fernsehempfänger gesendete Signal ist.

9. Verfahren zur Überwachung eines Territoriums, wobei

- an verschiedenen Stellen des Territoriums mehrere von mindestens einem Satelliten gesendete Funksignale empfangen werden,
- für jedes von einem bestimmten Satelliten empfangene Funksignal

-- eine Weglänge des Funksignals berechnet wird, das von einer der Stellen des Territorium bis zur Isotherme H1 bei 0°C empfangen wird und von atmosphärischen Niederschlägen betroffen ist,
-- die Leistung eines durch den Empfang des Funksignals erzeugten elektrischen Signals gemessen wird,
-- ein Verhältnis von der gemessenen Leistung zu einem Referenzwert berechnet wird, wobei der Referenzwert eine Messung der Leistung eines entsprechenden elektrischen Signals ist, das durch den Empfang eines Funksignals erzeugt wird, das von demselben Satelliten unter guten Wetterbedingungen gesendet wird,
-- ausgehend von diesem Verhältnis und von einer Weglänge, die Intensität und Position von Niederschlägen geschätzt werden, die das Signal gegenüber guten Witterungsverhältnissen gedämpft haben,

- anhand von Informationen über die Intensität und die Position der Niederschläge, die mehreren empfangenen Funksignale gedämpft haben, eine Niederschlagskarte basierend auf einer Projektion dieser Weglänge auf den Erdboden erzeugt wird.

**10.** System gemäß Ansprüchen 1 bis 8, ferner umfassend als Fernmesseinheit einen Satellitenfernsehempfänger, mit einem Antenneneingang zum Anschluss an eine Antenne zum Empfang von Satellitenfernsehsignalen, Mittel, die mit dem Antenneneingang wirkverbunden sind, um die an dem Antenneneingang bereitgestellten elektrischen Signale zu decodieren, wobei der Empfänger ferner Mittel zum Messen der Leistung eines an dem Antenneneingang bereitgestellten elektrischen Signals und Mittel zum Senden eines dieser Messung zugeordneten Datums an eine Ferneinrichtung (3).

## Revendications

**1.** Système de surveillance environnementale (1) comprenant un système central (3) et une pluralité d'unités de mesure à distance (2) connectées fonctionnellement au système central (3), dans lequel
chaque unité de mesure à distance (2) comprend

• un récepteur (200-203), apte à recevoir un signal radio transmis depuis un satellite (4) et à mesurer la puissance d'un signal électrique généré par la réception du signal radio,
• un système de transmission (205) pour transmettre au système central une donnée associé à la puissance mesurée, une information sur ledit satellite et une information sur l'unité de mesure,

et dans lequel le système central (3) comprend

• un récepteur (301) pour recevoir les données transmises depuis l'unité de mesure à distance
• une unité de traitement (3020) connectée fonctionnellement au récepteur (301), pour calculer, sur la base des données transmises depuis les unités de mesure à distance (2), une longueur de chemin des signaux radio reçus depuis les unités de mesure jusqu'à l'isotherme H1 de 0°C (P1),

l'intensité et la position sur le territoire de précipitations atmosphériques qui atténuent les signaux radio reçus depuis ladite pluralité d'unités de mesure, ladite position sur le territoire étant calculée à partir de la projection de ladite longueur de chemin sur le terrain (A, B).

**2.** Système selon la revendication 1, dans lequel au moins une unité de mesure de ladite pluralité comprend un récepteur apte à recevoir un signal radio dans la bande SHF, et dans lequel l'unité de traitement est apte à calculer l'intensité et la position de la pluie qui atténue le signal radio dans la bande SHF.

**3.** Système selon la revendication 1 ou 2, dans lequel au moins une unité de mesure de ladite pluralité comprend un récepteur apte à recevoir des signaux radio avec une fréquence d'1 à 2 GHz, notamment des signaux GNSS, et dans lequel l'unité de traitement apte à calculer la position de la vapeur d'eau qui atténue et/ou retarde le signal radio reçu avec une fréquence d'1 à 2 GHz.

**4.** Système selon la revendication 3, dans lequel le récepteur radio apte à recevoir des signaux radio avec une fréquence d'1 à 2 GHz est un récepteur GNSS capable de détecter une position du récepteur, et dans lequel l'unité de mesure est apte à transmettre la position détectée audit système central.

**5.** Système selon n'importe laquelle des revendications précédentes, dans lequel le système central comprend également une mémoire de programme (3021), contenant des lignes de code d'un modèle électronique d'un territoire à surveiller, le modèle comprenant des données sur l'orographie du territoire, et dans lequel l'unité de traitement est apte à calculer, sur la base des informations contenues dans le modèle électronique du territoire, et sur la base des données transmises depuis les unités de mesure à distance (2), un risque environnemental pour ledit territoire, ledit risque environnemental étant un risque dérivant des précipitations atmosphériques.

6. Système selon importe laquelle des revendications précédentes, rattachées à la revendication 2, dans lequel le système central est apte à calculer un chemin du signal intéressé par des précipitations et à calculer l'intensité de la pluie selon la formule suivante

$$R = \sqrt[\alpha]{\frac{a_r}{k}}$$

dans laquelle R est l'intensité de la précipitation (par exemple de la pluie) en mm/h, k et a sont des constantes sélectionnées selon la position du territoire et la fréquence et la polarisation du signal du satellite, $a_r$ est l'atténuation spécifique calculée pour le signal radio reçu, ladite atténuation spécifique étant calculée en divisant le rapport (exprimé en db) entre la puissance du signal électrique mesuré et une puissance de référence mesurée pour un signal électrique généré en réponse à la réception d'un signal radio transmis depuis le même satellite dans de bonnes conditions météorologiques par la longueur du chemin intéressé par les précipitations.

7. Système selon n'importe laquelle des revendications précédentes, dans lequel le système central comprend également des moyens de transmission de signaux d'alarme à au moins une unité l'alarme à distance située dans une région du territoire dans laquelle le risque environnemental calculé par l'unité de traitement dépasse une valeur seuil.

8. Système selon n'importe laquelle des revendications 1 à 7, dans lequel au moins une unité de mesure de ladite pluralité est reliée à un téléviseur domestique et dans lequel le signal électrique dont la puissance est mesurée est le signal transmis par une antenne du téléviseur vers un récepteur de téléviseur domestique.

9. Procédé de surveillance d'un territoire, dans lequel

- une pluralité de signaux radio transmis depuis au moins un satellite sont reçus sur des points différents du territoire,
- pour chaque signal radio reçu depuis un satellite spécifique

◦ une longueur d'un chemin du signal radio reçu depuis l'un des 10 points du territoire jusqu'à l'isotherme H1 de 0°C et intéressé par des précipitations atmosphériques, est calculée
◦ la puissance d'un signal électrique généré par la réception du signal radio est mesurée
◦ un rapport entre la puissance mesurée et une valeur de référence est calculé, ladite valeur de référence étant une mesure de la puissance d'un signal électrique correspondant généré par la réception d'un signal radio transmis depuis le même satellite dans de bonnes conditions météorologiques,
◦ à partir dudit rapport et de ladite longueur d'un chemin, l'intensité et la position des précipitations qui l'ont atténué par rapport à de bonnes conditions météorologiques sont estimées,

- sur la base des informations sur l'intensité et la position des précipitations qui ont atténué ladite pluralité des signaux radio reçus, une carte des précipitations est générée sur la base de la projection de ladite longueur du chemin sur le terrain.

10. Système selon les revendications 1 à 8 comprenant également, comme unité de mesure à distance, un récepteur de téléviseur par satellite, comprenant une entrée d'antenne pour la connexion à une antenne destinée à recevoir les signaux de télévision par satellite, des moyens connectés fonctionnellement à l'entrée de l'antenne pour décoder les signaux électriques fournis à ladite entrée d'antenne, le récepteur comprenant également des moyens pour mesurer la puissance d'un signal électrique fourni à ladite entrée d'antenne et des moyens pour transmettre à un dispositif distant (3) une donnée associée à ladite mesure.

Figure 1

Figure 2

Figure 3

Figure 4a

400 **start**

401 Calculating signal attenuation with respect to good weather conditions

402 Calculating trajectory

403 Calculating rain intensity

404 Calculating position of precipitations

405 Generating map of precipitations

406 Calculating the rate of water flow of a watercourse

407 Calcuting the profile of the water free surface

408 Calculating environmental risk

409 Generating alarm for territories at risk

410 **END**

Figure 4b

Figure 5

Figure 6

400 — ( start )

401 — Calculating signal attenuation with respect to good weather conditions

402 — Calculating trajectory

403 — Calculating rain intensity

411 — Calculating trajectories of hydrometeors

404 — Calculating position of precipitations

405 — Generating map of precipitations

406 — Calculating rate of water flow of a watercourse

Calculating profile of the water free surface — 407

Calculating environmental risk — 408

Generating alarm for territories at risk — 409

( END ) — 410

Figure 7

19

Figure 8a

Figure 8b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4204193 B
- JP 41322993 B
- US 2008274690 A
- EP 1049269 A
- US 20120139785 A